# EUROPÄISCHE PATENTANMELDUNG

(11) **EP 4 109 091 A1**
(43) Veröffentlichungstag der Anmeldung: **28.12.2022**
(21) Anmeldenummer: 21180547.8
(22) Anmeldetag: 21.06.2021
(51) Int. Cl.: G01N 30/74

(54) **VORRICHTUNG ZUM DETEKTIEREN VON VERDAMPFUNGSLICHTSTREUUNG, SOWIE EIN ANALYSEGERÄT MIT EINER SOLCHEN VORRICHTUNG UND EIN VERFAHREN ZUM DETEKTIEREN VON VERDAMPFUNGSLICHTSTREUUNG**

(71) Anmelder: Büchi Labortechnik AG, 9230 Flawil (CH)
(72) Erfinder: Bilger, Stefan, 9517 Mettlen (CH); Bürki, Martin, 9536 Schwarzenbach (CH)
(74) Vertreter: Hepp Wenger Ryffel AG

(57) **Zusammenfassung**

Die Erfindung betrifft eine Vorrichtung (1a, 1b) zum Detektieren von Verdampfungslichtstreuung einer Probe. Die Vorrichtung umfasst eine Leitung (25) zum Durchleiten eines eine Probe enthaltenden Mediums in einer Hauptflussrichtung der Vorrichtung (1a, lb); einen Zerstäuber, der mit der Leitung (25) zum Transport einer Flüssigkeit verbindbar ist; eine Verdampfungsröhre (5); und eine Detektoreinheit (6). Die Verdampfungsröhre (5) bildet eine Fluidverbindung zwischen dem Zerstäuber (23) und der Detektoreinheit (6). Zwischen der Leitung (25) und dem Zerstäuber ist ein Ventil (21) angeordnet, das zwischen einer Einzelflusskonfiguration und einer Splitflusskonfiguration umschaltbar ist. In der Splitflusskonfiguration ist ein erster Messanteil eines eine Probe enthaltenden Mediums von der Leitung in den Zerstäuber eintragbar.

## Beschreibung

Die Erfindung betrifft eine Vorrichtung zum Detektieren von Verdampfungslichtstreuung, sowie ein Analysesystem mit einer solchen Vorrichtung und ein Verfahren zum Detektieren von Verdampfungslichtstreuung.

Vorrichtungen zum Detektieren von Verdampfungslichtstreuung sind aus dem Stand der Technik bekannt. So beschriebt beispielsweise US 6 229 605 B einen ELS-(Evaporative Light Scattering)-Detektor, bei dem die Probe von einem Zerstäuber über ein Verbindungsrohr in eine optische Einheit geleitet wird. Im Zerstäuber wird die Probe mit einem Gas vermischt, so dass sich die Probe anschliessend in einer mobilen Phase befindet. Zwischen dem Zerstäuber und dem Verbindungsrohr ist ein Prallkörper angeordnet. Dieser bildet eine Kondensationsfläche, an der grössere Tropfen der Probe kondensieren und über einen Ablass abgeschieden werden. Der Prallkörper kann zwei Stellungen einnehmen, bei denen der Durchfluss entweder um 70 % oder um 18 % reduziert. Das Einbringen und Zerstäuben der Probe erfolgten in dieser Vorrichtung gleichzeitig. Das Gerät weist jedoch den Nachteil auf, dass die Probe vollständig eingebracht wird.

US 2001/0001575 A1 beschreibt einen Niedertemperaturadapter für einen ELS-Detektor. Der Adapter wird derart mit dem ELS-Detektor verbunden, dass durch einen Zerstäuber Flüssigkeit aus einer Chromatographie in eine Zerstäubungskammer geleitet wird, in der grössere Tropfen in der mobilen Phase abgeschieden werden. Mittels eines Eluat-Einlasses wird die flüssige Probe in den Zerstäuber geleitet. An der Öffnung befindet sich ein Gegendruckventil, mit welchem der Flüssigkeitsdruck ermittelt wird.

Der Zerstäuber ist mit einer Zerstäubungseinheit verbunden. Durch die Zerstäubungseinheit wird ein Spülgas und ein Zerstäubungsgas eingeleitet. Mit der Zerstäubungseinheit ist eine Zerstäubungskammer gekoppelt, wobei eine Vernebelung der Probe am Ende eines Spitzenstücks mit dem Zerstäubergas erfolgt. Die zerstäubte Probe wird in die Zerstäubungskammer überführt. Auch dieses System offenbart nicht die Möglichkeit, einen Teil der Probe zurückzugewinnen. Da es sich beim ELS-Verfahren um ein destruktives Verfahren handelt, wird sämtliches Probenmaterial, das in einen ELS-Detektor geleitet wird, zerstört und steht somit nicht für weitere Analysen oder Rückgewinnung der Probe zur Verfügung.

Es ist daher eine Aufgabe der Erfindung, die Nachteile des Stands der Technik zu überwinden. Insbesondere ist es eine Aufgabe der Erfindung eine Vorrichtung zum Detektieren von Verdampfungslichtstreuung bereitzustellen, die ein gleichzeitiges Einbringen und Zerstäuben der Probe ermöglicht, nur eine kleinste Probenmenge bei maximaler Detektion notwendig macht und Probenverluste minimiert.

Die Aufgabe wird durch die unabhängigen Patentansprüche gelöst. Weitere Ausführungsformen ergeben sich aus den abhängigen Patentansprüchen.

Ein erster Aspekt der Erfindung betrifft eine Vorrichtung zum Detektieren von Verdampfungslichtstreuung einer Probe. Die Vorrichtung umfasst:
- eine Leitung zum Durchleiten eines eine Probe enthaltenden Mediums in einer Hauptflussrichtung der Vorrichtung,
- einen Zerstäuber, der mit der Leitung zum Transport einer Flüssigkeit verbindbar ist,
- eine Verdampfungsröhre, und
- eine Detektoreinheit.

Die Verdampfungsröhre bildet eine Fluidverbindung zwischen dem Zerstäuber und der Detektoreinheit. Zwischen der Leitung und dem Zerstäuber ist ein Ventil angeordnet, das zwischen einer Einzelflusskonfiguration und einer Splitflusskonfiguration umschaltbar ist. In der Splitflusskonfiguration ist ein erster Messanteil eines eine Probe enthaltenden Mediums von der Leitung in den Zerstäuber eintragbar.

Unter Splitflusskonfiguration ist im Wesentlichen eine Aufspaltung des Flusses in mindestens zwei unterschiedliche Flussrichtungen zu verstehen.

Unter "Einzelflusskonfiguration" ist dabei ein Leitungsdurchfluss ohne Splitflussfunktion zu verstehen.

Unter Ventil ist dabei ein Durchgang zu verstehen, der öffenbar und schliessbar ist.

Unter "erster Messanteil" ist dabei der Anteil der Probe zu verstehen, der in den Zerstäuber eingetragen wird und in der Verdampfungsanalyse zerstört wird.

Unter "zweiter Messanteil" ist der Anteil der Probe zu verstehen, der nicht in den Zerstäuber und somit nicht in die Vorrichtung geleitet wird und vorzugsweise über die Hauptflussrichtung wiedergewinnbar/sammelbar ist.

Unter Medium wird dabei eine Flüssigkeit oder ein Gas oder Gasgemisch verstanden, in welchem sich die Probe löst oder verteilt. Beispielsweise kann es sich bei dem Medium um organische Lösungsmittel oder Wasser handeln, beispielsweise Aceton, Acetonitril, Methanol, Propanol, Chloroform, Cyclohexan, Dichlormethan oder Mischungen davon. Gas oder Gasgemische sind beispielsweise Luft, Stickstoff oder Argon, vorzugswiese Inertgase.

Die Detektoreinheit kann beispielsweise einen Feinstaubsensor umfassen, der Partikelgrössen von 0.3 bis 2.5 µm messen kann. Ein Beispiel eines solchen Sensors ist der Feinstaubsensor SPS30 der Firma Sensirion AG (Stäfa, Schweiz). Aber auch andere Fabrikate mit demselben Wirkprinzip und der gleichen Messaufgabe sind geeignet.

Die erfindungsgemässe Vorrichtung hat weiter den Vorteil, dass zum einen das Einbringen einer Probe in die Vorrichtung und die Zerstäubung praktisch gleichzeitig erfolgen können und zum anderen wird durch die Anordnung des Ventils nur ein kleinster Probenteil der destruktiven ELS-Detektion zugeführt. Ein Grossteil der Probe wird über die Hauptflussrichtung an dem Zerstäuber vorbeigeleitet. So kann die Probe zusätzlich, wie beispielsweise bei Flüssigkeitschromatographie üblich, mittels UV-Messung detektiert werden und anschliessend beispielsweise in einem Fraktionssammler gesammelt werden. Der Probenverlust wird minimiert.

Der Zerstäuber kann eine Einlassöffnung, eine mit einem Trägergas füllbare Kammer und eine Austrittsöffnung umfassen. Vorzugsweise umfasst die Einlassöffnung das Ventil. Das Ventil kann zeit- und frequenzgesteuert öffnen und somit die Eintrittsmenge dosieren. Als Trägergas kann beispielsweise Luft und bevorzugt ein Inertgas wie Stickstoff oder Edelgas, vorzugweise Argon, verwendet werden. Der Gasdruck weist vorzugsweise ein leicht niedrigeres Druckniveau auf als der Fluiddruck des Systems. Damit kann sichergestellt werden, dass keine Gase in das Fluidsystem zurückgedrückt werden. Bevorzugt ist ein Verhältnis von dem Druck im Fluidsystem zum Druck im Zerstäuber im Bereich von 1.5 : 1 und 1.1 : 1, vorzugsweise 1.3 : 1 und 1.1 : 1 und besonderes bevorzugt 1.2 : 1 und 1.15 : 1. Besonders bevorzugt ist ein Druck im Zerstäuber unter 2 bar, wenn das Fluidsystem einen Druck von 2 bar aufweist. Beispielsweise kann der Druck des Zerstäubers im Bereich um 1.7 bar.

Das Ventil ist vorteilhafterweise ein Mikroventil, vorzugsweise ein elektromagnetisches Mikroventil. Ein elektromagnetisches Mikroventil wird elektromagnetisch betätigt und vom Medium in der Regel direkt durchströmt. Im stromlosen Zustand ist das Ventil geschlossen. Eine Schliessfeder wirkt auf einen mobilen Anker mit einer Ventilkugel. Bei Bestromung der Ventilspule wird der mobile Anker mit der Ventilkugel vom Magnetfeld des stationären Ankers magnetisch angezogen, das Mikroventil öffnet und das Medium tritt aus. Vorzugsweise kann das Ventil einen hartdichtenden Ventilaufbau aus Hartstoffmaterialien aufweisen. Beispielsweise kann der Ventilsitz aus Saphir und die Ventilkugel aus Rubin sein. Hartdichtende Ventilaufbauten ermöglichen präzise Öffnungshübe von wenigstens hundertstel Millimetern und Wiederholgenauigkeit im Bereich von tausendstel Millimetern. Fein geschliffene und polierte Innenformen von Ventildüse und Ventilsitz ermöglichen optimale Strömungseigenschaften vor dem Austritt des Mediums. Dies ermöglicht einen strichgenauen Dosierstrahl für die kontaktlose Dosierung und eine optimale Tropfenform. Zudem sorgen die verwendeten Hartstoffbauteile für eine lange Lebensdauer und weisen hohe chemische als auch mechanische Widerstandsfähigkeit als auch Verträglichkeit auf.

Die Auslassöffnung ist vorzugsweise eine Düse.

In einer besonders bevorzugten Ausführungsform weist die Einlassöffnung mit Ventil eine Symmetrieachse und Auslassöffnung des Zerstäubers eine Symmetrieachse auf, die nicht koaxial zueinander angeordnet sind, sondern zueinander versetzt sind. Vorzugswese ist die Symmetrieachse des Ventils dabei unsymmetrisch zur Kammer, d.h. nicht auf einer Mittelachse der Kammer und die Symmetrieachse der Auslassöffnung symmetrisch zur Kammer, d.h. auf einer Mittelachse der Kammer, angeordnet.

Es hat sich überraschend gezeigt, dass sich durch diese Anordnung eine besonders vorteilhafte Zerstäubung ergibt und der Probeneintrag weiter optimiert wird, so dass der Eintrag kleinster Probenmengen bei maximaler Detektion ausreicht.

In einer besonders bevorzugten Ausführungsform wird das Ventil von dem die Probe enthaltenden Medium quer durchströmt, d.h. das Ventil verfügt über zwei Querbohrungen, vorzugsweise im Ventilkopf, durch welche das Medium in einer Hauptflussrichtung quer zum Einlassöffnung des Zerstäubers fliessen kann, vorzugsweise in einem Winkel von 90 °. Die Hauptflussrichtung kann aber auch in einem Winkel grösser 90 ° in Bezug zur Zerstäubungsrichtung erfolgen. Eine Flussrichtung des ersten Messanteils kann also quer zu zumindest einem Teil der Hauptflussrichtung angeordnet sein. Beispielsweise kann der Ventilkopf zwei Bohrungen aufweisen und als sogenannter "cross-head" vorliegen.

Eine quer zur Zerstäubungsrichtung verlaufende Hauptflussrichtung hat den Vorteil, dass der Druckabfall über das Ventil bei Eintrag in den Zerstäuber verringert wird.

Es ist aber auch denkbar, dass die Hauptflussrichtung zunächst in Zerstäubungsrichtung verläuft und erst ab dem Zerstäuber gewinkelt verläuft. Das Medium kann dabei das Ventil umströmen. Der Ventilkopf kann dann nur eine Bohrung aufweisen, so dass der Hauptstrom den Ventilkopf nur teilweise quer durchströmt.

Vorzugsweise kann die Einlassöffnung des Zerstäubers und die eingebrachte Menge des ersten Messanteils über die Schaltfrequenz und/oder die Öffnungsdauer des Ventils gesteuert oder steuerbar sein. Kurze Taktzeiten ermöglichen ein gleichzeitiges Aufteilen und Einbringen der Probe. Durch kurze Taktzeiten ist zudem die Steuerung der Tropfengrösse möglich. Auf diese Weise lässt sich der Probeneintrag gezielt steuern und der Probeneintrag wird so gering wie möglich gehalten. Beispielsweise kann die Schaltfrequenz 20 bis 50 Hz betragen. Die Öffnungszeit kann 50 bis 300 ms betragen. Der Probeneintrag beträgt vorzugsweise weniger als 30 µL. Die Schaltung kann dabei über Parameter im Umfeld gesteuert sein, beispielsweise über Druck und Flussraten. So kann sich die Schaltfrequenz beispielsweise einer Druckänderung und/oder Änderung der Flussrate anpassen, so dass der Probeneintrag immer optimal zu den vorherrschenden Bedingungen im System erfolgt.

Es ist aber auch möglich die Schaltfrequenz und/oder Öffnungszeiten vor Beginn der Detektion festzulegen.

Der Zerstäuber kann mit einer Spüleinheit verbindbar sein, die Teil der erfindungsgemässen Vorrichtung sein kann. Die Spüleinheit erfüllt den Zweck, Restmengen an Medium aus dem Ventil herauszudrücken. Eine solche Anordnung ist besonders vorteilhaft beim "cross-head"-Ventil, also bei einer quer zum Zerstäuber verlaufenden Hauptflussrichtung. Als Spülmedium wird vorzugsweise Luft verwendet, aber auch reiner Stickstoff oder ein Edelgas, vorzugsweise Argon, oder andere Inertgase oder Gasgemische sind denkbar.

Die Detektoreinheit kann bevorzugt einen optischen Detektor umfassen. Bei einer "Evaporative Light Scattering"-Detektion (ELSD), wie die hier beschriebene, wird das Licht, welches an der Wolke aus Probenpartikeln gestreut wird, von einer Photodiode aufgenommen und in einen elektrischen Wert umgewandelt/ausgegeben [mV]. Je höher die Reflektion, also die Lichtmenge, welche auf die Diode trifft, umso höher der mV-Wert. Beim ELSD geht es daher nicht um die Absorption bei bestimmten Wellenlängen, sondern darum das Vorhandensein oder Nichtvorhandensein einer Probe in der Transportluft im Verdampfungsrohr nachzuweisen.

Insbesondere weist die Detektoreinheit einen Optikblock umfassend eine Linse auf, vorzugsweise eine asphärische Linse. Eine asphärische Linse hat die Eigenschaft, Streulicht und andere diffuse Lichtstrahlen zu bündeln und auf einen definierten Punkt zu fokussieren. Dadurch wird die Signalstärke erhöht und erlaubt Filterfunktionen zur Homogenisierung des angezeigten Signals ohne dass ein starkes Rauschen des Signals auftritt.

Des Weiteren kann die Verdampfungsröhre beheizbar sein. Bei einer beheizten Röhre wird die Verdampfungszeit zusätzlich optimiert. Es ist aber auch möglich, die Verdampfungsröhre unbeheizt zu belassen. Besonders bevorzugt ist eine Verdampfungsröhre bei der die Heizfunktion bei Bedarf zugeschaltet werden kann. Das eröffnet die Möglichkeit, eine auf die verwendeten Medien hin optimierte Verdampfung zu gewährleisten, ohne jedoch eine dauerhaft Beheizung bereitstellen zu müssen und bei hochvolatilen Substanzen einsetzen zu müssen. So wird eine besonders energieeffiziente Arbeitsweise der Vorrichtung ermöglicht.

Die Verdampfungsröhre kann aus einem Metall, vorzugsweise Stahl, oder Glas gefertigt sein. Lösungsmittelbeständige Kunststoffe sind ebenfalls denkbar.

Die Verdampfungsröhre kann linear, spiralförmig, L-förmig oder U-förmig ausgebildet sein. Es ist nahezu jede beliebige Form möglich, solange eine ausreichend gute Verdampfung über die gegebene Strecke ermöglicht wird. So kann die Verdampfungsröhre beispielsweise je nach Platzangebot und/oder anwendungsspezifisch auch unterschiedlich lang gestaltet sein.

Weiter kann die Leitung der Vorrichtung eingangsseitig mit einer Trennsäule, insbesondere einer Trennsäule für Hochleistungschromatografie, verbindbar oder verbunden sein. Dies ermöglicht beispielsweise den Einsatz einer ELS-Detektion zusätzlich zu den bei chromatographischen Verfahren üblichen UV-Vis-Detektion. Einerseits wird dadurch eine zusätzliche Verifizierung der bereits identifizieren Substanzen ermöglicht und andererseits lassen sich damit auch Substanzen identifizieren, die nicht im UV-Vis-Bereich absorbieren.

Ein weiterer Aspekt der Erfindung betrifft ein Analysegerät, insbesondere ein Chromatographiegerät, umfassend eine Vorrichtung zum Erfassen von Verdampfungslichtstreuung einer Probe wie vorhergehend beschrieben.

Besonders bevorzugt handelt es sich bei dem Chromatographiegerät um ein Hochleistungschromatographiesystem (HPLC). Ein HPLC-System umfasst üblicherweise ein Eluentenreservoir, elektromagnetische Mischventile mit Doppelhubkolbenpumpe, Mehr-WegeVentile, Druckkompensationsschleifen, um Pumpimpulse der Pumpe zu egalisieren, eine Mischkammer, ein manuelles Einspritzventil, Trennsäule, HPLC-Einheit, Detektor-Einheit, Computer-Interface, PC und allenfalls Drucker zur Ergebnisausgabe. Das die Trennsäule verlassende Eluat kann über eine Hauptflussrichtung zu der Detektoreinheit, vorzugsweise einen UV-Vis-Detektor, z.B. ein Photodioden-Array-Detektor, geführt sein. Vorteilhafterweise ist die erfindungsgemässe Vorrichtung zum Detektieren von Verdampfungslichtstreuung in Hauptflussrichtung zwischen der Trennsäule und der Detektoreinheit angeordnet, so dass in der Splitflusskonfiguration des Ventils ein erster Messanteil in den Zerstäuber der Vorrichtung lenkbar ist und ein zweiter, in der Regel grösserer, Messanteil in die UV-Vis-Detektoreinheit der HPLC Vorrichtung leitbar ist.

Damit sichergestellt ist, dass stets ein Differenzdruck zwischen Luft und Fluidik aufrechterhalten bleibt, kann der Druckabfall, der durch die unterschiedlichen Flussraten hervorgerufen werden kann, über das System regelungstechnisch berücksichtigt werden. Das heisst, steigt der Fluiddruck im System, muss der Gasdruck nachkorrigiert werden, so dass die Druckdifferenz auf dem konstant gleichen Wert erhalten bleibt. Sinkt der Druck im Fluidsystem gilt das gleiche.

Grundsätzlich kann das Analysegerät alle Gerät umfassen, in denen es darum geht, in einem Trägermedium Feststoffe zu erkennen, die für den Anwender von Interesse sind und deshalb in den nachfolgenden Prozessschritten dezidiert gesammelt werden. Dies kann beispielsweise neben der Chromatografie überall dort sinnvoll sein, wo Substanzen vorkommen, die nicht im UV Licht absorbieren und darum von herkömmlichen Detektoren nicht erkannt werden können.

Es ist auch möglich nur die Vorrichtung selbst als Analysengerät zu nutzen.

Ein weiterer Aspekt der Erfindung betrifft ein Verfahren zum Detektieren von Verdampfungslichtstreuung einer Probe. Das Verfahren umfasst die Schritte:
a) Einleiten eines eine Probe enthaltenden Mediums in eine Leitung, insbesondere in einer Vorrichtung wie vorhergehend beschrieben,
b) Simultanes Eintragen und Zerstäuben eines ersten Messanteils des Mediums mit der enthaltenden Probe in einen Zerstäuber,
c) Verdampfen des zerstäubten Mediums
d) Messen der Verdampfungslichtstreuung der Probe.

Das Verdampfen des Mediums in Schritt c) kann mit oder ohne zusätzlichem Beheizen der Verdampfungsröhre erfolgen, je nach Flüchtigkeit des Mediums.

Das simultane Eintragen und das Zerstäuben des ersten Messanteils in Schritt b) kann in vordefinierten Zeitintervallen erfolgt.

Das Eintragen und das Zerstäuben des ersten Messanteils in Schritt b) kann aber auch in Abhängigkeit von Systemparametern, vorzugsweise Druck und/oder Flussrate, erfolgen.

Beispielsweise kann die Einlassöffnung des Zerstäubers über die Schaltfrequenz und/oder die Öffnungsdauer gesteuert oder steuerbar sein. Die Schaltung kann derart getaktet sein, dass beim Eintrag gleichzeitig die Zerstäubung erfolgt. Auch kann durch die Taktzeit die Tropfengrösse eingestellt werden. Die Steuerung kann beispielsweise über ein separates Programm erfolgen, z.B. durch eine entsprechende Applikationssoftware. Die Applikationssoftware kann so gestaltet sein, dass der Anwender spezifische Parameter auswählen und setzen kann. Es ist auch möglich, dass der Anwender keine Parameter setzen oder überwachen muss und die entsprechende Steuerung im Hintergrund erfolgt. Beispielsweise kann, wie oben beschrieben, eine Steuerung in Abhängigkeit von Umgebungsparametern, wie Druck und Flussrate, erfolgen oder über vorfixierte Schaltungsfrequenzen und/oder Öffnungszeiten erfolgen.

Das die Probe enthaltende Medium wurde vor Schritt a) vorzugsweise mittels eines Trennverfahrens, vorzugsweise eines Chromatographieverfahrens, aufgearbeitet. Das die Probe enthaltende Medium kann dann ein Eluat ist.

Die Erfindung wird nachfolgend anhand von konkreten Ausführungsbeispielen näher erläutert. Die Beispiele sind dabei nicht einschränkend zu verstehen. Gleiche Bezugszeichen kennzeichnen gleiche Elemente.

Es zeigen:
- Figur 1A:: eine perspektive Ansicht einer ersten erfindungsgemässen Vorrichtung.
- Figur 1B:: Vorderansicht der ersten erfindungsgemässen Vorrichtung gemäss Figur 1A mit Schnittebenen.
- Figur 2:: eine Seitenansicht entlang der Ebene A-A aus Figur 1B.
- Figur 3:: eine Vergrösserung des Ausschnitts X aus dem Zerstäubungsmodul gemäss Figur 2.
- Figur 4:: eine horizontale Schnittansicht durch die erste erfindungsgemässe Vorrichtung entlang der Ebene K-K in Figur 1B.
- Figur 5:: eine Vergrösserung des Ausschnitt Y aus der Detektoreinheit aus Figur 4.
- Figur 6:: eine weitere Schnittansicht der ersten erfindungsgemässen Vorrichtung entlang der Ebene G-G in Figur 1B.
- Figur 7:: eine Vergrösserung des Ausschnitts W aus der Detektoreinheit aus Figur 6.
- Figur 8:: eine weitere Seitenansicht der ersten erfindungsgemässen Vorrichtung entlang Ebene F-F in Figur 1B.
- Figur 9:: eine Vergrösserung des Ausschnitts Z aus Figur 8.
- Figur 10:: eine Seitenansicht einer zweiten erfindungsgemässen Ausführungsform mit Schnittebenen.
- Figur 11:: eine Seitenansicht der zweite Ausführungsform entlang der Ebene B-B in Figur 10.
- Figur 12:: eine Vergrösserung des Ausschnitts X aus Figur 11.
- Figur 13:: eine Schnittansicht der zweiten Ausführungsform entlang einer horizontalen Ebene D-D in Figur 10.
- Figur 14:: eine Vergrösserung des Ausschnitts Y aus Figur 13.

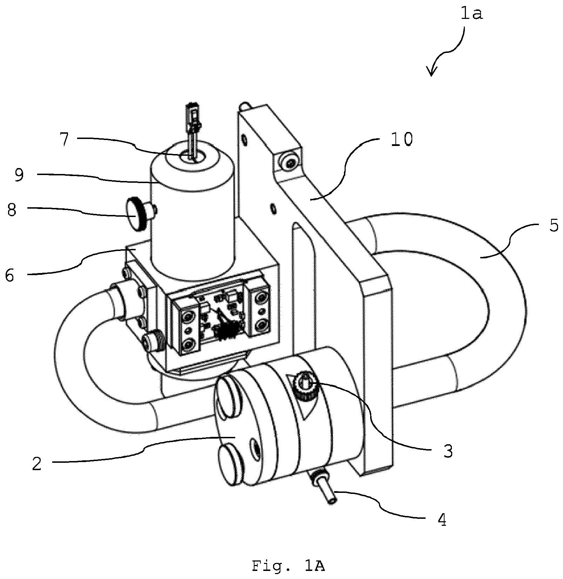

Figur 1A zeigt eine perspektive Ansicht einer ersten erfindungsgemässen Vorrichtung 1a. Gezeigt ist ein Zerstäubungsmodul 2 mit einem Fluideinlass 3, vorzugsweise für ein Eluat, und einem Fluidauslass 4. Zwischen dem Einlass 3 und Auslass 4 ist eine Leitung (nicht gezeigt) angeordnet, die das Durchleiten einer Probe, vorzugsweise Eluat, ermöglicht. In der perspektiven Ansicht befindet sich hinter dem Zerstäubungsmodul 2 und dem Basisträger 10 der Vorrichtung 1a eine Verdampfungsröhre 5 in einer U-förmigen Anordnung. Die Verdampfungsröhre 5 mündet in eine Detektoreinheit 6. Oberhalb der Detektoreinheit 6 ist ein Gehäuse 9 angeordnet, in das ein Laser 7 über ein Stellrad 8 einstellbar montiert ist.

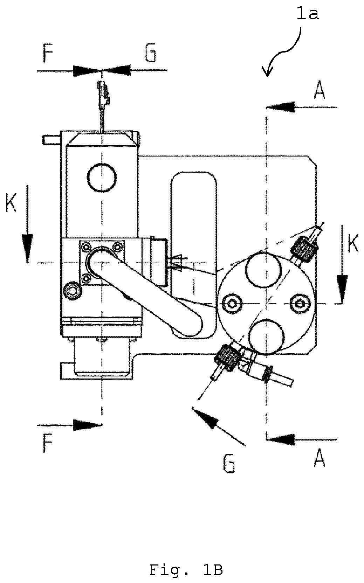

Figur 1B zeigt die erfindungsgemässe Vorrichtung 1a aus Figur 1A in einer Vorderansicht mit den für die nachfolgenden Bilder relevanten Schnittebenen.

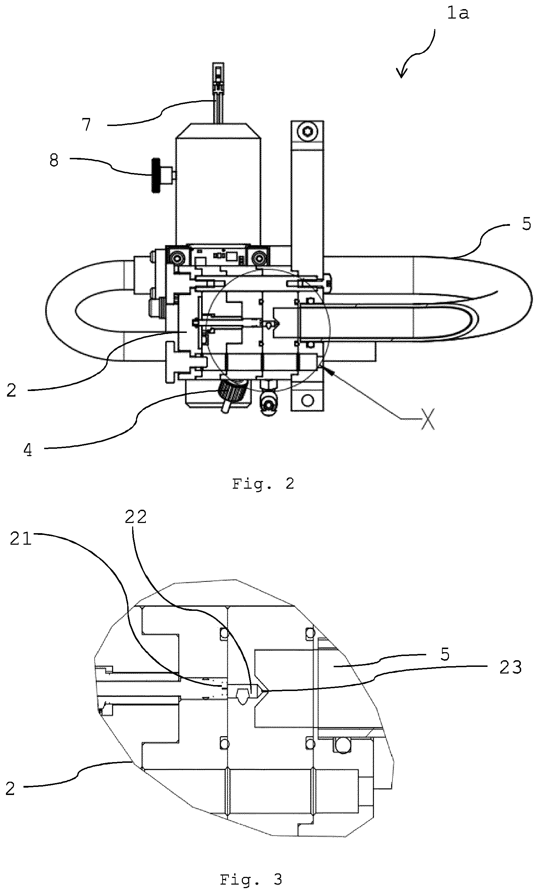

Figur 2 zeigt eine Seitenansicht der erfindungsgemässen Vorrichtung 1a entlang der Ebene A-A in Figur 1B mit einer detaillierten Darstellung der Innenansicht des Zerstäubungsmoduls 2. Der Ausschnitt X wird mit Bezug auf Figur 3 näher erläutert.

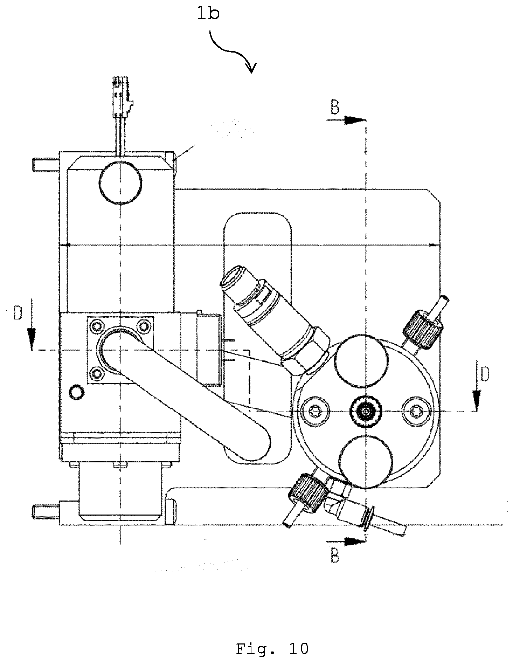

Figur 3 zeigt den Ausschnitt X aus Figur 2 in einer Vergrösserung. Innerhalb des Zerstäubungsmoduls 2 befindet sich ein Magnetventil 21. Mit der Stirnseite des Magnetventils 21 und der Auslassöffnung in Form einer Düse 23 wird die Zerstäuberkammer 22 gebildet, die Düse 23 mündet in die Verdampfungsröhre 5. Das Magnetventil 21 weist eine Symmetrieachse auf, die Düse weist eine Symmetrieachse auf, beide Achsen sind nicht koaxial sondern zueinander versetzt angeordnet. Die Symmetrieachse des Ventils ist dabei unsymmetrisch zur Kammer, die Symmetrieachse der Düse ist symmetrisch zur Kammer. Am Ende des Ventils 21 kann eine Spüleinheit angeordnet sein, wie in Figur 10 anhand einer alternativen Ausführungsform beschrieben wird. Die Hauptflussrichtung (nicht gezeigt) verläuft quer, d.h. in einem geneigten Winkel, zum Magnetventil 21. Luft der Spüleinheit fliesst längs von hinten nach vorne durch das Magnetventil (nicht gezeigt) und tritt am Auslass 4 (Figur 2) aus und entleert damit auch den Rest des Systems.

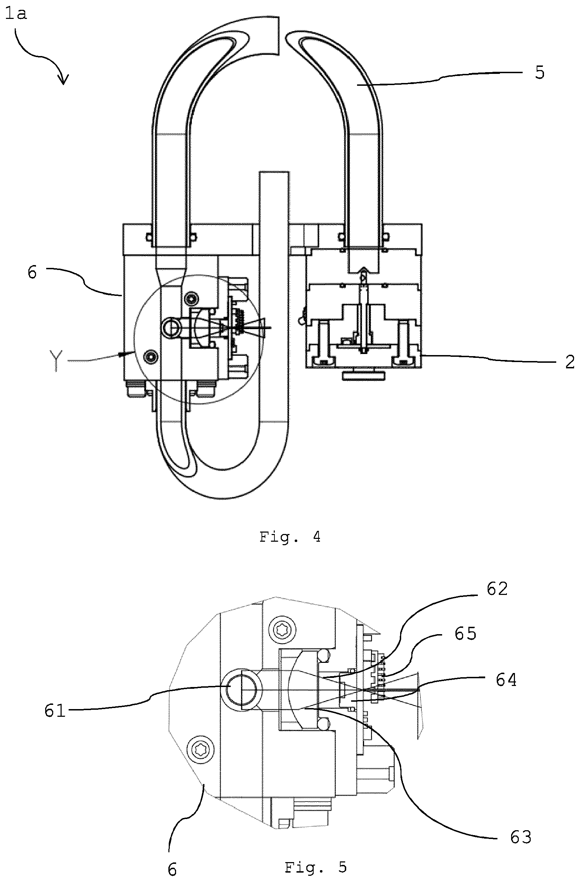

Figur 4 zeigt die erfindungsgemässe Vorrichtung 1a in einer horizontalen Schnittansicht entlang der Ebene K-K in Figur 1B. Zu sehen ist auch hier u.a. das Zerstäubungsmodul 2, die Verdampfungsröhre 5 und die Detektoreinheit 6. Der Ausschnitt Y der Detektoreinheit 6 wird in Figur 5 näher beschrieben.

Figur 5 zeigt den Ausschnitt Y aus Figur 4 in einer Vergrösserung. Im Detail sind wesentliche Elemente der Detektoreinheit 6 verdeutlicht. Die Detektoreinheit 6 ist derart angeordnet, dass ein die Probe enthaltendes Medium aus der Verdampfungsröhre die Detektoreinheit 6 im Messbereich 61 durchläuft. Im Messbereich 61 trifft das Licht des Laserstrahls auf die Probenteilchen und wird an den Probenteilchen gestreut. Die Streustrahlung 62 trifft dann senkrecht zum einfallenden Laserlicht auf eine Linse 63, z.B. eine sphärische Linse, und wird durch dies gebündelt und auf eine Photodiode 64 gelenkt. Der resultierende elektrische Strom wird durch die elektronische Schnittstelle 65 verarbeitet und als Signal ausgegeben.

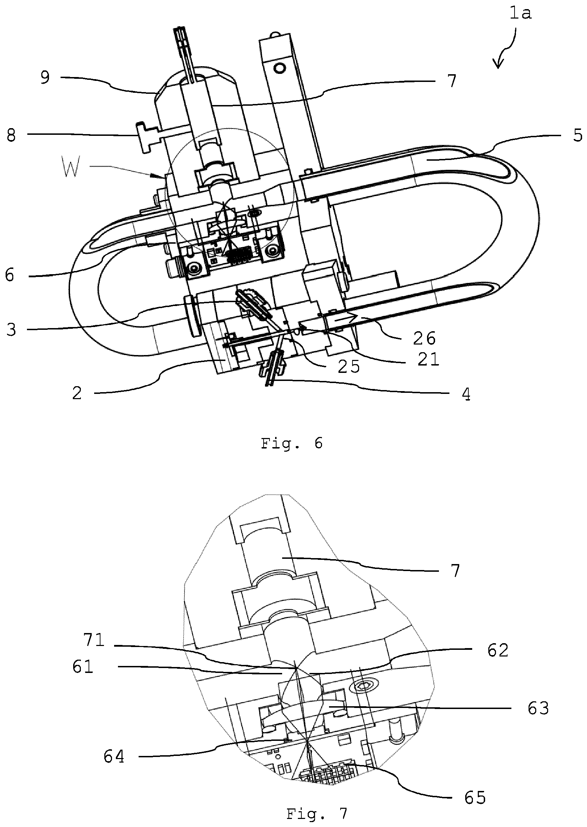

Figur 6 zeigt eine weitere Schnittansicht der erfindungsgemässen Vorrichtung 1a entlang der Ebene G-G in Figur 1B. Im unteren Teil des Bildes ist das Zerstäubungsmodul 2 zu erkennen. Die Zerstäubungsmodul 2 umfasst den Einlass 3 und den Auslass 4, die mittels einer Leitung 25 verbunden sind. Die Leitung kreuzt das Ventil 21 in einem geneigten Winkel zur Zerstäubungsrichtung 26 (Pfeil). In einer weiteren Ausführung ist es möglich, dass die Leitung senkrecht im rechten Winkel zur Zerstäubungsrichtung verläuft (Fig. 10-13). Nach der Zerstäubung wird die Probe in Zerstäubungsrichtung 26 durch die Verdampfungsröhre 5 geführt, bis sie in der Detektoreinheit 6 detektiert wird. Oberhalb der Detektoreinheit ist der Laser 7 in einem Gehäuse 9 angeordnet und mit dem Stellrad 8 fixiert.

Figur 7 zeigt den Ausschnitt W der Figur 6 in einer Vergrösserung. Gezeigt ist eine zweite Perspektive des Messbereichs 61, in welchem das Laserlicht 71 auf Probenpartikel (nicht gezeigt) fällt und gestreut wird. Das gestreute Licht 62 wird an der Linse 63 gebündelt und der an der Photodiode 64 entstehende Strom über die elektronische Schnittstelle 65 verarbeitet und als Signal ausgegeben.

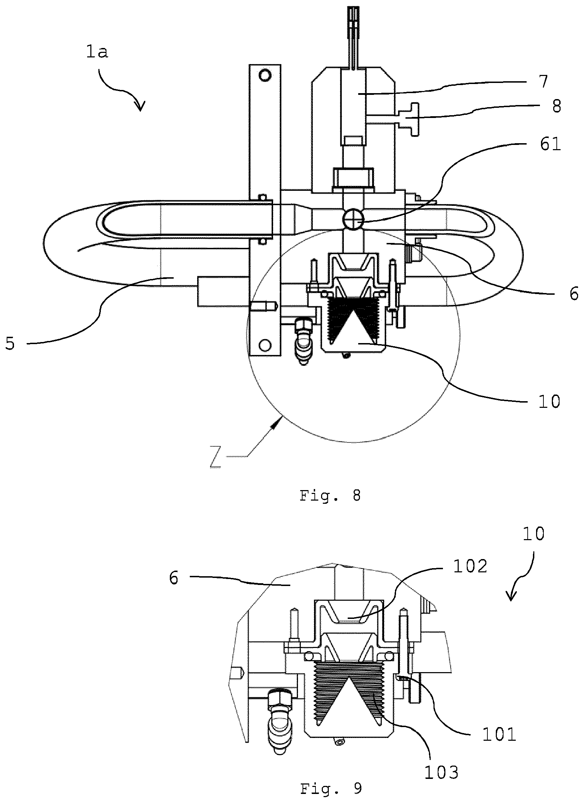

Figur 8 zeigt nochmals eine Seitenansicht der erfindungsgemässen Vorrichtung 1a entlang der Ebene F-F in Figur 1B. Die Figur zeigt zusätzlich zu den bereits genannten Elementen eine Lichtfalle 10 unterhalb des Lasers 7. Die Lichtfalle 10 fängt nicht gestreutes Licht des Lasers auf und verhindert somit eine Reflexion, die zu einem verfälschten Messergebnis führen könnte. Details der Lichtfalle 10 sind in Figur 9 gezeigt.

Figur 9 zeigt die Detailansicht Z aus Figur 8 in einer Vergrösserung. Die Lichtfalle 10 ist mittels Schrauben 101 unterhalb der Laserquelle und unterhalb der Messzone 61 (Fig. 8) an die Detektoreinheit 6 angebracht. Nicht gestreutes Licht trifft durch eine Blende 102 auf ein lichtabsorbierende Element 103.

Figur 10 zeigt eine alternative Ausführungsform in einer Vorderansicht mit eingezeichneten Schnittebenen. Die Vorrichtung wird mit Bezug auf diese Schnittebenen nachfolgende näher beschrieben.

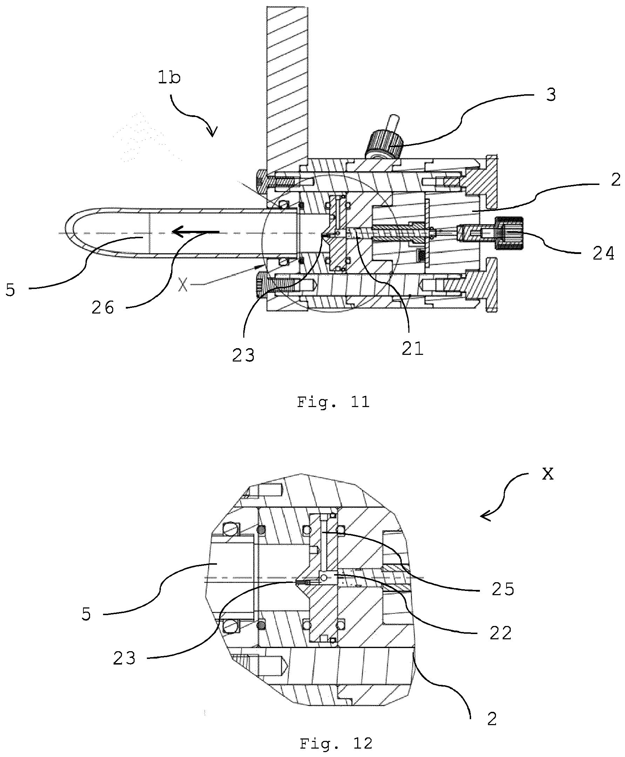

Figur 11 zeigt die alternative Ausführungsform 1b der erfindungsgemässen Vorrichtung entlang der Ebene B-B in Figur 10. Auch die Vorrichtung 1b enthält das Zerstäubungsmodul 2, einen Einlass 3 (und einen Auslass, der nicht gezeigt ist) und eine Verdampfungsröhre 5. Zusätzlich weist die Vorrichtung 1b einen Anschluss 24 für eine Spüleinheit auf, über die ein Spülgas in das Zerstäubungsmodul 2 eingetragen werden kann und das Zerstäubungsmodul 2 und insbesondere das Ventil 21 von Restmedium reinigt.

Der Ausschnitt X ist vergrössert in Figur 12 dargestellt. Im Unterschied zu dem vorherigen Ausführungsbeispiel durchbohrt die Leitung 25 das Ventil 21 in einem rechten Winkel und ist somit rechtwinklig zur Zerstäuberdüse 23 bzw. der Zerstäubungsrichtung 26 (Figur 11) angeordnet.

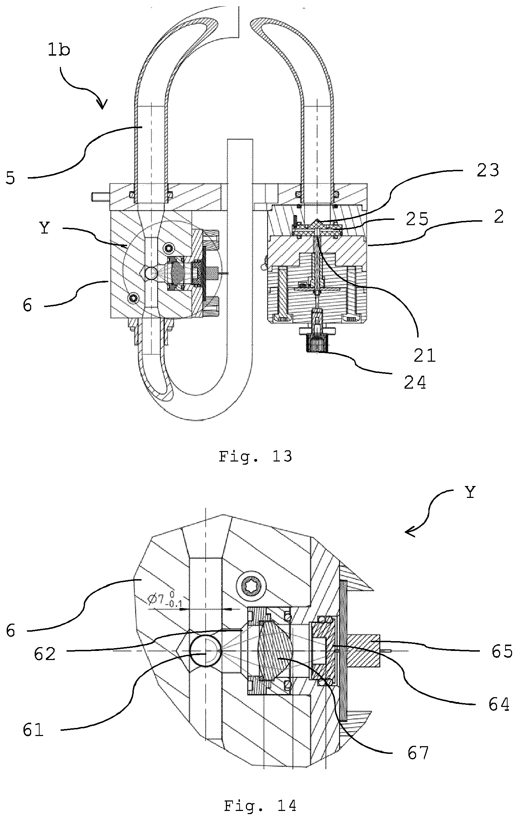

Figur 13 zeigt die alternative Ausführungsform der Vorrichtung 1b entlang der Ebene D-D in Figur 10, so dass einerseits das Zerstäubungsmodul 2 mit seinen einzelnen Elementen als auch die Detektoreinheit 6 zu erkennen sind. Die Detektoreinheit 6 wird mit Bezug auf Figur 14 näher erläutert.

In Figur 14 ist zu erkennen, dass das im Streubereich 61 gestreute Licht 62 auf eine asphärische Linse 67 trifft, dahinter gebündelt wird und auf eine Photodiode 64 trifft. Das durch die Photodiode 64 erzeugte Signal wird über die elektronische Schnittstelle 65 verarbeitet.

Grundsätzlich können die einzelnen Elemente der hier gezeigten ersten und zweiten Ausführungsformen beliebig kombiniert werden und sind nicht auf die jeweiligen Ausführungsformen beschränkt.

## Patentansprüche

1. Vorrichtung (1a, 1b) zum Detektieren von Verdampfungslichtstreuung einer Probe, wobei die Vorrichtung (1a, 1b) umfasst:
- eine Leitung (25) zum Durchleiten eines eine Probe enthaltenden Mediums in einer Hauptflussrichtung der Vorrichtung (1a, 1b),
- einen Zerstäuber , der mit der Leitung (25) zum Transport einer Flüssigkeit verbindbar ist,
- eine Verdampfungsröhre (5), und
- eine Detektoreinheit (6),
wobei die Verdampfungsröhre (5) eine Fluidverbindung zwischen dem Zerstäuber und der Detektoreinheit (6) bildet, **dadurch gekennzeichnet, dass** zwischen der Leitung (25) und dem Zerstäuber ein Ventil (21) angeordnet ist, wobei das Ventil (21) zwischen einer Einzelflusskonfiguration und einer Splitflusskonfiguration umschaltbar ist, wobei in der Splitflusskonfiguration ein erster Messanteil eines eine Probe enthaltenden Mediums von der Leitung (25) in den Zerstäuber eintragbar ist.

2. Vorrichtung (1a, 1b) nach Anspruch 1, wobei der Zerstäuber eine Einlassöffnung (21), eine mit einem Trägergas füllbare Kammer (22) und eine Austrittsöffnung (23) umfasst.

3. Vorrichtung (1a, 1b) nach einem der vorherigen Ansprüche, wobei das Ventil (21) ein Mikroventil, vorzugsweise ein elektromagnetisches Mikroventil, ist.

4. Vorrichtung (1a, 1b) nach einem der Ansprüche 2 oder 3, wobei die Einlassöffnung (21) des Zerstäubers über die Schaltfrequenz und/oder die Öffnungsdauer gesteuert oder steuerbar ist.

5. Vorrichtung (1a, 1b) nach einem der vorherigen Ansprüche, wobei eine Flussrichtung des ersten Messanteils quer zu zumindest einem Teil der Hauptflussrichtung angeordnet ist.

6. Vorrichtung (1a, 1b) nach einem der vorherigen Ansprüche, wobei der Zerstäuber mit einer Spüleinheit (24) verbunden oder verbindbar ist.

7. Vorrichtung (1a, 1b) nach einem der vorherigen Ansprüche, wobei die Detektoreinheit (6) einen optischen Detektor umfasst.

8. Vorrichtung (1a, 1b) nach einem der vorherigen Ansprüche, wobei die Verdampfungsröhre (5) beheizbar ist.

9. Vorrichtung (1a, 1b) nach einem der vorherigen Ansprüche, wobei die Verdampfungsröhre (5) aus einem Metall, vorzugsweise Stahl, oder Glas gefertigt ist.

10. Vorrichtung (1a, 1b) nach einem der vorherigen Ansprüche, wobei die Verdampfungsröhre (5) linear, spiralförmig, L-förmig oder U-förmig ausgebildet ist.

11. Vorrichtung (1a, 1b) nach einem der vorherigen Ansprüche, wobei die Leitung (25) eingangsseitig mit einer Trennsäule, insbesondere einer Trennsäule für Hochleistungschromatografie, verbindbar oder verbunden ist.

12. Analysegerät, insbesondere ein Chromatographiegerät, umfassend eine Vorrichtung (1a, 1b) zum Erfassen von Verdampfungslichtstreuung einer Probe nach einem der Ansprüche 1 bis 11.

13. Verfahren zum Detektieren von Verdampfungslichtstreuung einer Probe, umfassend die Schritte:
a) Einleiten eines eine Probe enthaltenden Mediums in eine Leitung (25), insbesondere einer Vorrichtung (1a, 1b) nach einem der Ansprüche 1 bis 11,
b) Simultanes Eintragen und Zerstäuben eines ersten Messanteils des Mediums mit der enthaltenden Probe in einen Zerstäuber (23),
c) Verdampfen des zerstäubten Mediums,
d) Messen der Verdampfungslichtstreuung der Probe.

14. Verfahren nach Anspruch 13, wobei das Eintragen und das Zerstäuben des ersten Messanteils in Schritt b) in vordefinierten Zeitintervallen erfolgt.

15. Verfahren nach Anspruch 13, wobei das Eintragen und das Zerstäuben des ersten Messanteils in Schritt b) in Abhängigkeit von Systemparametern, vorzugsweise Druck und/oder Flussrate, erfolgt.

16. Verfahren nach einem der Ansprüche 13 bis 15, wobei das die Probe enthaltende Medium vor Schritt a) mittels eines Trennverfahrens, vorzugsweise eines Chromatografieverfahrens, aufgearbeitet wird.
